# EUROPEAN PATENT APPLICATION

(11) **EP 3 267 408 A1**
(43) Date of publication of application: **10.01.2018**
(21) Application number: 17179397.9
(22) Date of filing: 03.07.2017
(51) Int. Cl.: G07G 1/00

(54) **CHECK-OUT SYSTEM WITH MERCHANDISE READING APPARATUS AND POS TERMINAL**

(30) Priority: 04.07.2016 JP 2016132646
(71) Applicant: Toshiba TEC Kabushiki Kaisha, Tokyo 141-8562 (JP)
(72) Inventor: SASAKI, Yuta, Shinagawa-ku, Tokyo 141-8562 (JP); IIZAKA, Hitoshi, Shinagawa-ku, Tokyo 141-8562 (JP); MIYAKOSHI, Hidehiko, Shinagawa-ku, Tokyo 141-8562 (JP); NAITOU, Hidehiro, Shinagawa-ku, Tokyo 141-8562 (JP); HATANAKA, Yuichiro, Shinagawa-ku, Tokyo 141-8562 (JP)
(74) Representative: Takeuchi, Maya

(57) **Abstract**

A check-out system according to an embodiment includes an image capturing device that captures an image of a merchandise item. A processor determines whether the captured image includes a symbol on the merchandise item corresponding to a merchandise ID. If the captured image includes the symbol, the processor retrieves the merchandise ID. If the captured image does not include the symbol, the processor identifies the merchandise item based on an object recognition processing. The processor retrieves a corresponding merchandise ID and a merchandise category. The processor determines whether the merchandise item is likely to include the symbol based on the merchandise category. If the merchandise item likely includes the symbol, the processor controls a display to display a message instructing an operator to check for the symbol. The processor performs a settlement processing with respect to the merchandise items corresponding to one or more of the retrieved merchandise IDs.

## Description

### FIELD

Embodiments described herein relate generally to a check-out system with a merchandise reading apparatus and a POS terminal.

### BACKGROUND

A generic object recognition technique is used to recognize merchandise by extracting feature data of the merchandise from image data which is obtained by image-capturing the merchandise, and then compares the extracted feature data with feature data stored in advance. In addition, in a check-out system, the technique is used for identifying merchandise which is sold at a store, and the identified merchandise is thereby registered for a sale. The check-out system extracts one or more candidate merchandise items based on the feature data of the merchandise obtained from the image data compared to the feature data stored in advance.

In addition, merchandise items may include a symbol such as a barcode or a two-dimensional code printed or attached thereto (hereinafter, referred to as "the symbol is attached"). Such merchandise is recognized by image-capturing the symbol and analyzing the symbol. For example, the symbol may be attached to a package or the like in a manufacturing processing of the merchandise. The symbol may be attached to a bag or wrapper (that is, bundled merchandise) with a plurality of the merchandise items packaged therein. Also, a symbol indicating a discount may be attached to the merchandise for which a cost is changed by the discount, and the like.

However, even with respect to the merchandise with the symbol attached, the symbol may not be image-captured because of a direction or a position of the merchandise at the time of image-capturing. In such a case, the candidate merchandise is extracted based only on the image captured and the generic object recognition technique.

However, for example, the displayed symbol on bundled merchandise or on a discounted merchandise may include a price of the entire merchandise (bundle price or discount price). If such a merchandise item is determined by the generic object recognition technique, the price thereof may be different from the price which is extracted by image-capturing the symbol. In addition, since various types of merchandise items having the same shapes or colors may be present, there is a high likelihood that a merchandise item is suitably identified based on the symbol. Therefore, for the merchandise having the symbol attached, it is preferable to image-capture the symbol to identify the merchandise.

### DESCRIPTION OF THE DRAWINGS

Fig. 1 is a perspective view showing an example configuration of a check-out system including a merchandise reading apparatus and POS terminal according to an embodiment.
Fig. 2 is a block diagram showing an example configuration of the merchandise reading apparatus.
Fig. 3 illustrates an example of a merchandise master data table provided in the merchandise reading apparatus.
Fig. 4 is a block diagram showing an example configuration of the POS terminal.
Fig. 5 is a functional block diagram showing an example functional configuration of the merchandise reading apparatus.
Fig. 6 is a flow chart showing an example sequence of operations of a control processing of the merchandise reading apparatus.
Fig. 7 illustrates an example screen displayed by the merchandise reading apparatus.
Fig. 8 is a flow chart showing an example sequence of operations of a control processing of the POS terminal.
Fig. 9 is a flow chart showing an example sequence of operations of a control processing of a merchandise reading apparatus according to a modification example.
Fig. 10 is a perspective view showing an example configuration of a self-service POS according to another embodiment.
Fig. 11 is a block diagram showing an example hardware configuration of the self-service POS shown in Fig. 10.

### DETAILED DESCRIPTION

Embodiments provide a check-out system, with a merchandise reading apparatus and a POS terminal, which can provide notification that a symbol is likely attached to the merchandise.

A check-out system according to an embodiment includes an image capturing device that captures an image of a merchandise item. A processor receives the captured image of the merchandise item, and determines whether the captured image includes a symbol on the merchandise item corresponding to a merchandise ID. If the captured image includes the symbol, the processor retrieves the merchandise ID corresponding to the symbol. If the captured image does not include the symbol, the processor identifies the merchandise item in the captured image based on an object recognition processing. Based on the identification of the merchandise item, the processor retrieves a corresponding merchandise ID and a merchandise category. The processor determines whether the merchandise item is likely to include the symbol based on the merchandise category. If the merchandise item is determined to likely include the symbol, the processor controls a display to display a message instructing an operator to check for the symbol. The processor performs a settlement processing with respect to the merchandise items corresponding to one or more of the retrieved merchandise IDs.

The processor may be further configured to: identify a plurality of candidate merchandise items using the object recognition processing, and control the display to display the plurality of candidate merchandise items, wherein the merchandise item in the captured image is identified further based on a selection of one candidate merchandise item from among the plurality of displayed candidate merchandise items.

The processor may be further configured to: determine whether the captured image includes only a portion of the symbol on the merchandise item, and if the captured image is determined to include only the portion of the symbol on the merchandise item, control the display to display the message instructing an operator to check for the symbol.

The processor may further comprise: a storage device that stores a data table including merchandise IDs each corresponding to a different merchandise item, wherein the processor retrieves the merchandise ID from the data table stored in the storage device.

Preferably, the data table includes feature values corresponding to each different merchandise item, and the processor performs the object recognition processing by extracting feature values from the captured image and comparing the extracted feature values to the feature values included in the data table.

The apparatus may further comprise: a communication interface, wherein the processor retrieves, via the communication interface, the merchandise ID from a data table stored in a remote storage device.

The apparatus may further comprise: a communication interface, wherein the settlement processing includes transmitting, via the communication interface, the retrieved merchandise ID to a settlement device configured to perform payment processing.

Preferably, if the captured image does not include the symbol and if the merchandise item is determined to likely include the symbol, before performing the settlement processing, the processor waits for the image capturing device to capture a new image of the merchandise item and retrieves a merchandise ID corresponding to the symbol included in the new image.

The present invention also relates to a method of registering merchandise in a check-out system, the method comprising: capturing an image of an merchandise item with an image capturing device; determining whether the captured image includes a symbol corresponding to a merchandise ID; if the captured image includes the symbol, retrieve the merchandise ID corresponding to the symbol; if the captured image does not include the symbol: identifying the merchandise item in the captured image based on object recognition processing, based on the identification of the merchandise item, retrieving a corresponding merchandise ID and a merchandise category, determining whether the merchandise item is likely to include the symbol based on the merchandise category, and if the merchandise item is determined to likely include the symbol, displaying a message instructing an operator to check for the symbol; and performing settlement processing with respect to the merchandise items corresponding to one or more of the retrieved merchandise IDs.

The method may further comprise the steps of: identifying a plurality of candidate merchandise items using the object recognition processing; and displaying the plurality of candidate merchandise items, wherein the merchandise item in the captured image is identified further based on a selection of one candidate merchandise item from among the plurality of displayed candidate merchandise items.

The method may, further comprise the steps of: determining whether the captured image includes only a portion of the symbol on the merchandise item; and if the captured image is determined to include only the portion of the symbol on the merchandise item, displaying the message instructing an operator to check for the symbol

The method may further comprise: storing a data table including merchandise IDs each corresponding to a different merchandise item, wherein the merchandise ID are retrieved from the data table stored in the storage device.

Preferably, the data table includes feature values corresponding to each different merchandise item, and the object recognition processing is performed by extracting feature values from the captured image and comparing the extracted feature values to the feature values included in the data table.

Preferably, the merchandise ID is retrieved from a data table stored in a remote storage device.

Preferably, the settlement processing includes transmitting, via a communication interface, the retrieved merchandise ID to a settlement device configured to perform payment processing.

The method may further comprise the steps of: if the captured image does not include the symbol and if the merchandise item is determined to likely to include the symbol, before performing the settlement processing: waiting for the image capturing device to capture a new image of the merchandise item; and retrieving a merchandise ID corresponding to the symbol included in the new image.

The present invention further relates to a non-transitory computer readable medium containing instructions causing a merchandise reading apparatus to perform a method of registering merchandise, the method comprising: capturing an image of an merchandise item with an image capturing device; determining whether the captured image includes a symbol corresponding to a merchandise ID; if the captured image includes the symbol, retrieve the merchandise ID corresponding to the symbol; if the captured image does not include the symbol: identifying the merchandise item in the captured image based on object recognition processing, based on the identification of the merchandise item, retrieving a corresponding merchandise ID and a merchandise category, determining whether the merchandise item is likely to include the symbol based on the merchandise category, and if the merchandise item is determined to likely include the symbol, displaying a message instructing an operator to check for the symbol; and performing settlement processing with respect to the merchandise items corresponding to one or more of the retrieved merchandise IDs.

The method may further comprise the steps of: determining whether the captured image includes only a portion of the symbol on the merchandise item; and if the captured image is determined to include only the portion of the symbol on the merchandise item, displaying the message instructing an operator to check for the symbol

Preferably, the settlement processing includes transmitting, via a communication interface, the retrieved merchandise ID to a settlement device configured to perform payment processing.

The method may further comprise the steps of: if the captured image does not include the symbol and if the merchandise item is determined to likely to include the symbol, before performing the settlement processing: waiting for the image capturing device to capture a new image of the merchandise item; and retrieving a merchandise ID corresponding to the symbol included in the new image.

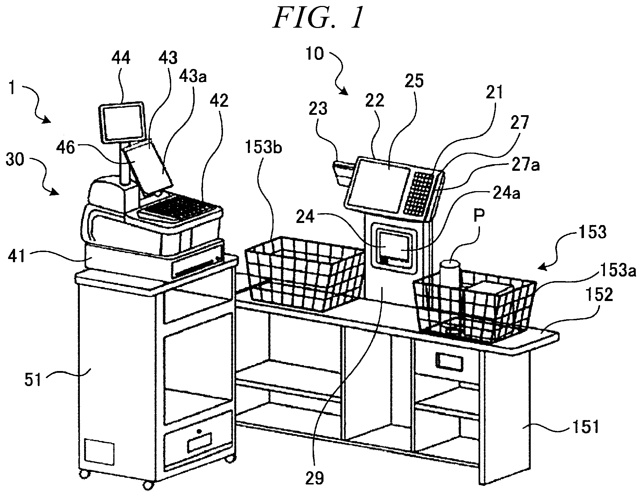

Hereinafter, with reference to Fig. 1 to Fig. 8, the check-out system and a program will be described in detail according to the embodiment. The embodiment will be described using a merchandise reading apparatus as the check-out system. The exemplary embodiment is not limited to the embodiment to be described later.

Fig. 1 is a perspective view showing an example configuration of a check-out system 1 according to the embodiment. The check-out system 1 executes a sales registration processing and/or a payment processing for merchandise by inputting merchandise information of the merchandise to be sold, which is provided at a shop such as a supermarket or a convenience store. As illustrated in Fig. 1, the check-out system 1 is provided with the merchandise reading apparatus 10 and a POS terminal 30.

The merchandise reading apparatus 10 is arranged on a counter table 151 and is in communication with the POS terminal 30. The merchandise reading apparatus 10 includes a housing 29.

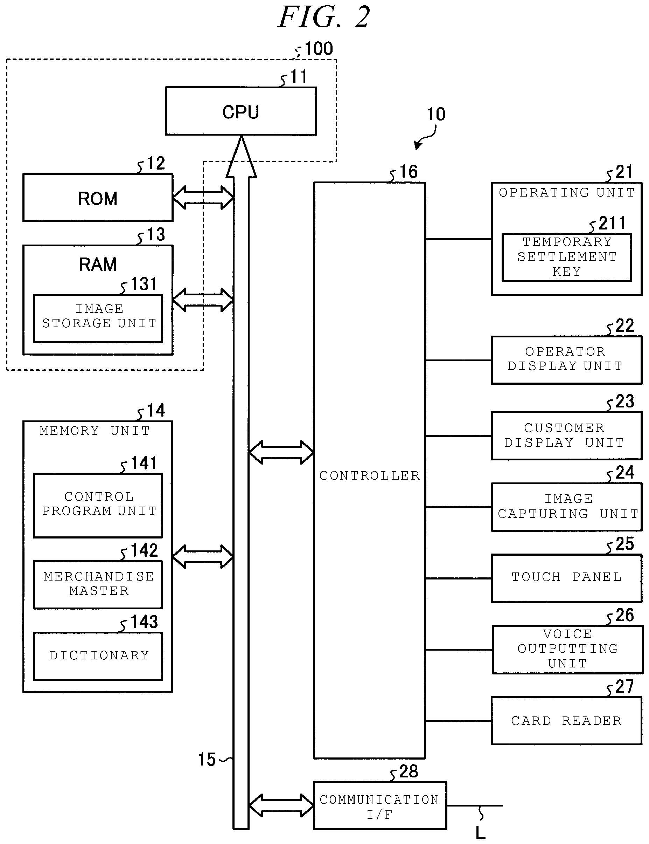

A reading window 24a of an image capturing unit 24 is provided in a front surface of the housing 29. A card reader 27 which includes an operator display unit 22, a customer display unit 23, an operating unit 21, and a groove 27a are provided on a upper side of the housing 29. A touch panel 25 is provided on the operator display unit 22. The operating unit 21 includes a temporary settlement key 211 (refer to Fig. 2) which inputs a command for finishing a processing in the merchandise reading apparatus 10.

A load receiving surface 152 is formed on an upper surface of the counter table 151. A shopping basket 153 for storing the merchandise P is placed on the load receiving surface 152. As the shopping basket 153, there may be a first shopping basket 153a brought by a customer, and a second shopping basket 153b which is placed at a position where the merchandise reading apparatus 10 is sandwiched between the first shopping basket 153a and the second shopping basket 153b.

The merchandise P to be purchased by the customer is stored in the first shopping basket 153a. An operator which operates the merchandise reading apparatus 10 takes out the merchandise P inside the first shopping basket 153a and moves the merchandise into the second shopping basket 153b. The second shopping basket 153b including the moved merchandise P therein is moved to a location, which is not shown, where the customer places the merchandise in bags. The customer moves the merchandise P from the second shopping basket 153b into a shopping bag at the location where the customer bags the merchandise.

The merchandise P is passed across a front of the reading window 24a of the merchandise reading apparatus 10 when the merchandise P is moved from the first shopping basket 153a to the second shopping basket 153b. At this time, the merchandise reading apparatus 10 captures an image of the merchandise P using the image capturing unit 24 (refer to Fig. 2) disposed inside the reading window 24a. In a case in which it is detected that a symbol is attached to a captured image of the image-captured merchandise, the merchandise reading apparatus 10 analyzes the symbol and acquires a merchandise ID (Identification) included in the symbol, and thus one merchandise is specified.

Meanwhile, if a symbol is not detected from the captured image of the image-captured merchandise, the merchandise reading apparatus 10 compares feature data of the merchandise in the captured image with feature data of a plurality of candidate merchandise stored in a dictionary in advance and calculates a degree of similarity. Also, the merchandise reading apparatus 10 executes a generic object recognition based on the degree of similarity, and extracts one or more candidate merchandise items corresponding to the image-captured merchandise. Regarding such a generic object recognition, various recognition techniques are described in: Keiji Yanai, "The current State and Future Directions on Generic Object Recognition", journal of information processing society of Japan, Vol. 48, No. SIG16 (accessed on 24 January, 2013, at <URL:http://mm.cs.uec.ac.jp/IPSJ-TCVIM-Yanai.pdf>)

In a case in which the candidate merchandise has a high degree of similarity (for example, degree of similarity 95%, or more), the merchandise reading apparatus 10 reads the merchandise ID from a merchandise master data table 142 (refer to Fig. 2). The merchandise ID is specific information for specifying the merchandise that was image-captured as the candidate merchandise having high degree of similarity. Also, the merchandise reading apparatus 10 transmits the read merchandise ID to the POS terminal 30.

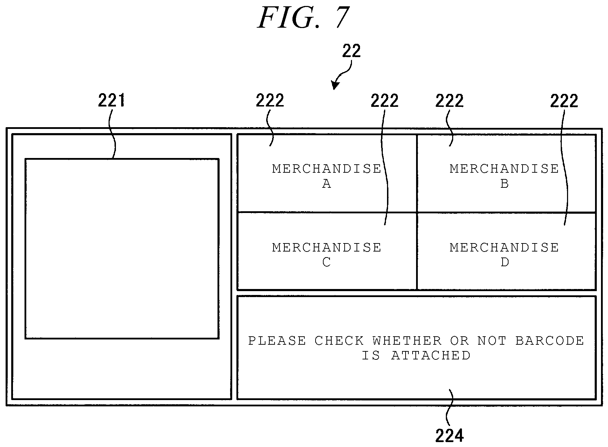

Meanwhile, in a case in which the candidate merchandise having high degree of similarity is not present, the merchandise reading apparatus 10 displays on the operator display unit 22, merchandise candidate items 222 (refer to Fig. 7) on which a certain number of candidate merchandise (for example, the four with the highest degree of similarity) having high degree of similarity extracted by the generic object recognition are respectively displayed. The operator operates a touch panel 25, and selects the merchandise from the displayed candidate merchandise. The merchandise reading apparatus 10 reads the merchandise ID specifying the selected merchandise from the merchandise master data table 142. Also, the merchandise reading apparatus 10 transmits the read merchandise ID to the POS terminal 30.

The POS terminal 30 is positioned on a upper surface of a drawer 41 on a check-out table 51 which is disposed in a L shape with the counter table 151. The drawer 41 stores money (paper money and coins) deposited by the customer in a cash box. The drawer 41 also stores change to hand over the customer in the cash box. When the drawer 41 receives an opening operation from the POS terminal 30, the cash box is opened.

In the POS terminal 30, the operating unit 42 operated by the operator is disposed on an upper surface. When seen from the operator of the operating unit 42, the operator display unit 43, which displays information toward the operator, is positioned further than the operating unit 42. The operator display unit 43 displays information with respect to the operator. The touch panel 46 is stacked on a display surface 43a of the operator display unit 43. The customer display unit 44 is rotatably mounted at a position further than the operator display unit 43. The customer display unit 44 displays information with respect to the customer.

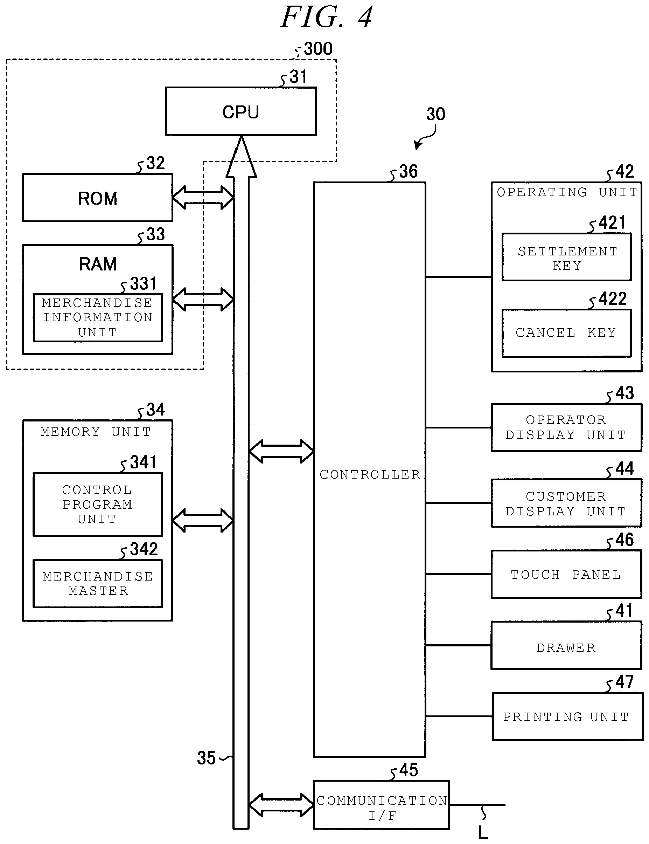

The POS terminal 30 reads the merchandise information from the merchandise master data table 142 (refer to Fig. 4) based on the merchandise ID received from the merchandise reading apparatus 10, and executes a sales registration processing of the merchandise. The sales registration processing is a processing in which a merchandise name or a cost (collectively, so called merchandise information) of the merchandise is displayed based on the merchandise information and the merchandise information is stored in a merchandise information unit 331 (refer to Fig. 4). The operator operates the temporary settlement key 211 after registration is repeatedly performed on all merchandises P stored in the first shopping basket 153a.

When a settlement key 421 (refer to Fig. 4) in the POS terminal 30 is operated after the temporary settlement key 211 is operated, the POS terminal 30 executes a payment processing to the sales-registration processed merchandise. The payment processing is calculating and displaying change, instructing a change machine to issue the change, issuing a receipt on which the merchandise information and/or payment information (total amount of money, deposit amount, changes amount, and the like) is printed. Moreover, the sales registration processing and the payment processing are referred together as a transaction processing. In addition, the transaction-processed information is called sales information.

Next, a hardware configuration of the merchandise reading apparatus 10 will be described using the block diagram of Fig. 2. As shown in Fig. 2, the merchandise reading apparatus 10 is provided with a central processing unit (CPU) 11 which is a main controller. The merchandise reading apparatus 10 is also provided with a read only memory (ROM) 12 storing various programs. In addition, the merchandise reading apparatus 10 is provided with a random access memory (RAM) 13 which functions as a work area of the CPU 11. Also, the merchandise reading apparatus 10 is provided with the memory unit 14, and the like, which is provided as a HDD or a flash memory, and the like for storing various programs. The CPU 11, the ROM 12, the RAM 13, and the memory unit 14 are connected to each other through a data bus 15.

The CPU 11, the ROM 12, and the RAM 13 are configured as a control unit 100. The control unit 100 executes a control processing to be described later when the CPU 11 is operated in accordance with the control program held in the RAM 13 and/or stored in a control program unit 141 of the memory unit 14.

The RAM 13 also stores various data. The RAM 13 is provided with an image storage unit 131. The image storage unit 131 stores an image of the merchandise which is image-captured by the image capturing unit 24 to be described later.

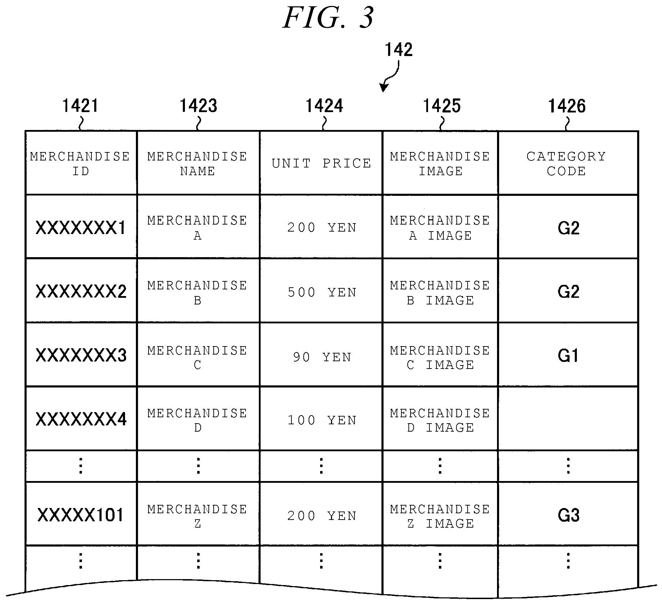

The memory unit 14 includes the control program unit 141, the merchandise master data table 142, and a dictionary 143. The control program unit 141 stores a program for controlling the merchandise reading apparatus 10. The merchandise master data table 142 (to be described in Fig. 3) stores various information relating to the merchandise in each candidate merchandise. The dictionary 143 stores the feature data which indicates a feature of the merchandise, in association with each merchandise ID specifying the candidate merchandise. The feature data is information significantly indicating features of the merchandise such as colors or patterns of a surface of the merchandise, shapes, and unevenness states. Also, in the embodiment, a storing unit includes the merchandise master 142 and the dictionary 143. A memory allocation having both of a function of the merchandise master data table 142 and a function of the dictionary 143 may be set as the storing unit. In this case, the storing unit stores the feature data of the merchandise in correlation with the candidate merchandise.

The control unit 100 is connected to the operating unit 21, the operator display unit 22, the customer display unit 23, the image capturing unit 24, the touch panel 25, a voice outputting unit 26, and the card reader 27 through the data bus 15 and the controller 16. In addition, the control unit 100 is connected to a communication interface (I/F) 28 through the data bus 15. The communication I/F 28 is connected to the POS terminal 30 through a communication line L.

The image capturing unit 24 includes a color CCD sensor or a color CMOS sensor. The image capturing unit 24 captures an image of merchandise passing in front of the reading window 24a. In addition, the image capturing unit 24 captures an image of a bag with merchandise inside passing in front of the reading window 24a. The image capturing unit 24 captures an image of the merchandise passing in front of the reading window 24a or a symbol attached to the bag. The voice outputting unit 26 is a voice circuit, a speaker, and the like for generating warning sound set in advance, or the like. The voice outputting unit 26 provides auditory informing such as warning sound under the control of the control unit 100. The card reader 27 reads card information from a card scanned through the groove 27a.

Next, using Fig. 3, description is provided of a data configuration of the merchandise master data table 142. The merchandise master 142 stores a merchandise name, a unit price, a merchandise image, and a category code of the candidate merchandise by corresponding to the merchandise ID specifying the candidate merchandise. As illustrated in Fig. 3, the merchandise master 142 is provided with a merchandise ID column 1421, a merchandise name column 1423, a unit price column 1424, a merchandise image column 1425, and a category code column 1426.

The merchandise ID column 1421 stores the merchandise ID specifying candidate merchandise. The merchandise name column 1423 stores the merchandise name of the candidate merchandise specified by the merchandise ID. The unit price column 1424 stores a unit price of the candidate merchandise specified by the merchandise ID. The merchandise image column 1425 stores a representative image (or images) indicating features of the candidate merchandise specified by the merchandise ID.

The category code column 1426 stores a category code indicating that the candidate merchandise is included in a specific category. The specific category is a category of the merchandise or a group of merchandise which a symbol is likely attached. For example, the category code G1 is a code for sorting the merchandise to which the symbol is attached in a manufacturing processing of the merchandise. In addition, the category code G2 a code for sorting the merchandises in which bundled merchandise are present. The bundled merchandise means that all merchandise items bundled together are treated as one merchandise item, and a symbol is attached to the bag or wrapper. In addition, a symbol of discount may be attached to the merchandise, as part of a time sale, a clearance sale, or the like. The category code G3 is a code for sorting the merchandise where the merchandise to which a symbol indicating discount is attached is present. The merchandise for which the category code is not stored in the category code column 1426 indicates merchandise to which the symbol may not be attached. A merchandise which has a likelihood that the symbol is attached thereto in a manufacturing processing, merchandise items which have a likelihood that one or a plurality of merchandise are bundled together, and a merchandise in which costs thereof may be discounted are stored in the category code in advance in the category code column 1426. Also, the merchandise master 142 stores the category code being corresponded to the merchandise ID. Meanwhile, the dictionary 143 stores feature data corresponding to the merchandise ID. That is, the storing unit stores the feature data and the category code in correlation with each other.

Next, a hardware configuration of the POS terminal 30 will be described with reference to the block diagram of Fig. 4. As illustrated in Fig. 4, the POS terminal 30 is provided with a CPU 31, which is a main controller. The POS terminal 30 is provided with a ROM 32 which stores various programs. The POS terminal 30 is provided with a RAM 33 which functions as a work area of the CPU 31. In addition, the POS terminal 30 is provided with a memory unit 34 which is provided as a HDD or a flash memory, or the like for storing various programs, and the like. The CPU 31, the ROM 32, the RAM 33, and the memory unit 34 are connected to each other through a data bus 35.

The CPU 31, the ROM 32, and the RAM 33 function as a control unit 300. The control unit 300 executes a control processing to be described later when the CPU 31 is operated according to a control program developed by the RAM 33, which is stored in a control program unit 341 of the memory unit 34.

The RAM 33 also stores various data. The RAM 33 is provided with a merchandise information unit 331. The merchandise information unit 331 stores merchandise information of merchandise on which the sales registration processing is performed by the POS terminal 30.

The memory unit 34 is provided with the control program unit 341 and the merchandise master data table 342. The control program unit 341 stores a program for controlling the POS terminal 30. The merchandise master data table 342 similar to the merchandise master data table 142 of the merchandise reading apparatus 10. Since the sales registration processing or a cancel processing of additional merchandise may be executed, the POS terminal 30 stores the merchandise master data table 342.

The control unit 300 is connected to the operating unit 42 provided with the settlement key 421 and a cancel key 422, the display unit for operator 43, the display unit for customer 44, the touch panel 46, the drawer 41, and a printing unit 47 through the data bus 35 and the controller 36. The settlement key 421 is operated when the payment processing for a transaction is executed. The cancel key 422 is a key operated when the merchandise information on which the sales registration processing is performed immediately before is to be deleted from the merchandise information unit 331. If the cancel key 422 is operated, the merchandise information of the merchandise on which the sales registration processing is performed immediately before is deleted, and the sales registration processing relating to the cancelled merchandise is nullified. In addition, the communication I/F 45 is connected to the control unit 300 through the data bus 35, and the communication I/F 45 is connected to the merchandise reading apparatus 10 through the communication line L.

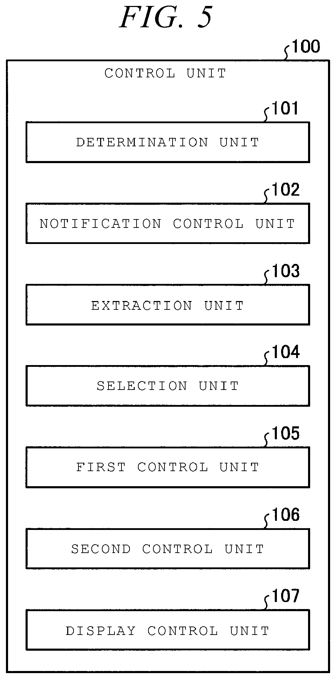

Hereinafter, a control processing of the merchandise reading apparatus 10 and the POS terminal 30 will be described. Fig. 5 is a functional block diagram showing an example functional configuration of the merchandise reading apparatus 10. The control unit 100 functions as a determination unit 101, a notification control unit 102, an extraction unit 103, a selection unit 104, a first control unit 105, a second control unit 106, and a display control unit 107, in accordance with a control program stored in the control program unit 141 of the memory unit 14.

The determination unit 101 has a function of determining a likelihood that the symbol is attached, on the basis of the category information in correlation with the candidate merchandise extracted by the image capturing unit 24 from the merchandise master data table 142. That is, the merchandise master data table 142 stores the candidate merchandise and the category information showing whether there is a likelihood that the symbol is attached to the candidate merchandise by correlating them with each other.

The notification control unit 102 has a function of controlling the operator display unit 22 to display that the symbol is likely attached, when the determination unit 101 determines that there is the likelihood.

The extraction unit 103 has a function of extracting one or a plurality of candidate merchandises having feature data similar to the feature data of the merchandise included in the captured image.

The selection unit 104 has a function of selecting candidate merchandise from the candidate merchandise extracted by the extraction unit 103.

The first control unit 105 has a function of automatically performing the sales registration processing on the candidate merchandise in which the likelihood is determined to be present by the determination unit 101.

The second control unit 106 has a function of performing the sales registration processing on the merchandise based on that instruction of sales registration to the candidate merchandise in which the likelihood is determined to be present by the determination unit 101.

The display control unit 107 has a function of displaying one or more of the candidate merchandises extracted by the extraction unit 103 on the operator display unit 22.

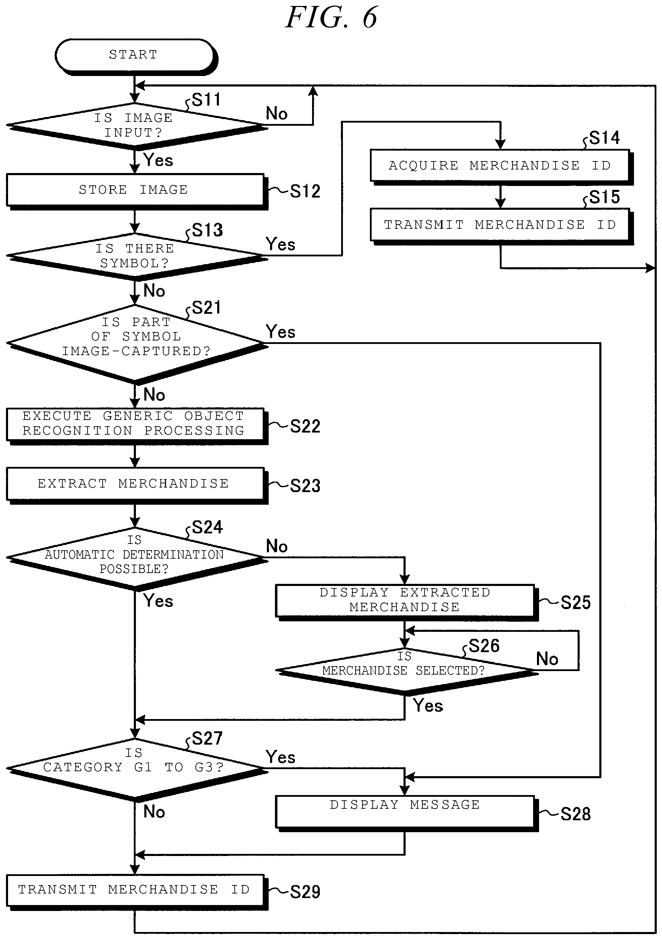

Fig. 6 is a flow chart showing an example sequence of operations of a control processing of the merchandise reading apparatus 10. As illustrated in Fig. 6, the control unit 100 determines whether or not the image capturing unit 24 inputs the captured image of the image-captured merchandise (S11). In a case in which the captured image is determined as being input (Yes of S11), the control unit 100 stores the input captured image in the image storage unit 131 (S12).

Next, the control unit 100 (in particular, the (determination unit 101) determines whether or not the symbol is included in the captured image stored in the image storage unit 131 (S13). The control unit 100 determines that the symbol is included in the captured image of the merchandise stored in the merchandise the image storage unit 131, in a case in which, for example, a barcode or a two- dimensional code is included in the captured image stored in the image storage unit 131. Whether or not the symbol is included in the captured image is determined by analyzing the stored image and determining whether or not an image where a feature of the barcode or the two-dimensional code is shown is present. In a case in which the image is an image showing the feature of the barcode or the two-dimensional code, the control unit 100 determines that the symbol is included in the captured image. In a case in which the symbol is determined as being included (Yes of S13), the control unit 100 (in particular, the specifying unit 102) analyzes the image-captured symbol and acquires the merchandise ID which specifies the merchandise having the symbol attached thereto (S14). Then, the control unit 100 transmits the acquired merchandise ID to the POS terminal 30 (S15). The control unit 100 returns to S11. Also, the merchandise ID may be acquired from another location based on a result of the analyzed symbol. In addition, in a case in which the captured image of the merchandise is determined as not being input (No of S11), the control unit 100 returns to S11.

Meanwhile, if it is determined that the symbol is not included in the captured image stored in the image storage unit 131 (No of S13), the control unit 100 determines whether or not a part of the symbol is captured in the captured image stored in S12 (S21). For example, a feature of the barcode or the two-dimensional code is captured as an image in the captured image, but in a case in which the entire symbol is not included in the captured image, it is determined that a part of the symbol is captured in the image. In a case in which a part of the symbol is determined as being captured (Yes of S21), since there is a likelihood that the symbol is attached to the image-captured merchandise, the control unit 100 instructs the controller 16 to display a message on the operator display unit 22 instructing the operator to check for the symbol (S28).

Meanwhile, in a case in which a part of the symbol is determined as not being captured in the captured image (No of S21), the control unit 100 performs a generic object recognition on the captured image of the merchandise stored in the image storage unit 131 (S22). That is, the control unit 100 compares the feature data of the image of the captured merchandise with the feature data stored in the dictionary 143 and determines a degree of similarity. Also, the control unit 100 (in particular, the extraction unit 103) extracts the merchandise ID of the merchandise having the determined degree of similarity equal to or greater than a predetermined value (for example, 60%). The control unit 100 extracts the merchandise information of the candidate merchandise of the extracted merchandise ID from the merchandise master 142 (S23). Specifically, the control unit 100 extracts the merchandise name of the extracted merchandise and the image of the merchandise in S23.

Next, the control unit 100 determines whether or not a candidate merchandise can be automatically determined from the extracted candidate merchandise (S24). The candidate merchandise, which can be automatically determined, is, for example, candidate merchandise having 95% or more degrees of similarity. The candidate merchandise having 95% or more degrees of similarity has feature data very similar to that of an image stored in the image storage unit 131, and the image-captured merchandise can be automatically determined.

In a case in which it is determined that the merchandise cannot be automatically determined (No of S24), the control unit 100 (in particular, the display control unit 107) controls the operator display unit 22 to display the candidate merchandises having the highest degrees of similarity among the extracted candidate merchandise (for example, the four highest similarities) (S25). Moreover, the control unit 100 (in particular, the display control unit 107) may control the operator display unit 22 to display all of the extracted candidate merchandise items.

Fig. 7 shows candidate merchandises displayed on the operator display unit 22. In Fig. 7, the operator display unit 22 displays an image area 221 and a merchandise candidate item 222. The image area 221 displays a captured image being captured by the image capturing unit 24. The merchandise candidate item 222 acquires the merchandise information (e.g., merchandise names, images of merchandises, and the like) of up to four highest candidate merchandises from the merchandise master 142 and allows the operator display unit 22 to display the acquired information. The operator selects one of the displayed merchandise items, which is determined to correspond to the image-captured merchandise, from the displayed candidate merchandises.

Returning to Fig. 6, the control unit 100 (in particular, the selection unit 105) determines whether or not a merchandise is selected (S26). The control unit 100 waits until the merchandise is selected (No of S26). In a case in which it is determined that the candidate merchandise may be automatically determined (Yes of S24), or a case in which it is determined that one of the candidate merchandises is selected (Yes of S26), the control unit 100 (in particular, the determination unit 101) determines whether the symbol is likely attached to the candidate merchandise (S27). Specifically, the control unit determines whether or not the symbol is likely attached to the candidate merchandise, based on the category codes stored in the category code column 1426, which correspond to the merchandise IDs of the candidate merchandise determined to be Yes in S24 and the candidate merchandise determined to be Yes in S26. If the category code is any one of G1, G2, and G3, the control unit determines that the symbol is likely attached to the merchandise. If the category is determined to be any one of G1, G2, and G3 (Yes of S27), the control unit 100 (in particular, the notification control unit 102) controls the operator display unit 22 to display a message instructing the operator to check for the symbol (S28). That is, since the candidate merchandise in which the category code is any one of G1, G2, and G3 has a likelihood that the symbol is attached thereto, the control unit 100 controls the display unit to display the message notifying the operator of the likelihood that the symbol is attached to the merchandise.

In S27, the control unit 100 determines whether or not the symbol is attached to the candidate merchandise. However, the candidate merchandise being determined in S27 was automatically determined in S24 or selected by the operator in S26 based on the merchandise image-captured in S11. Therefore, the candidate merchandise determined in S27 is the same as the merchandise image-captured in S11, on which the generic object recognition is performed in S22. That is, the control unit 100 substantially determines whether or not the symbol is attached to the merchandise image-captured in S11, on which the generic object recognition is performed in S22, in S27.

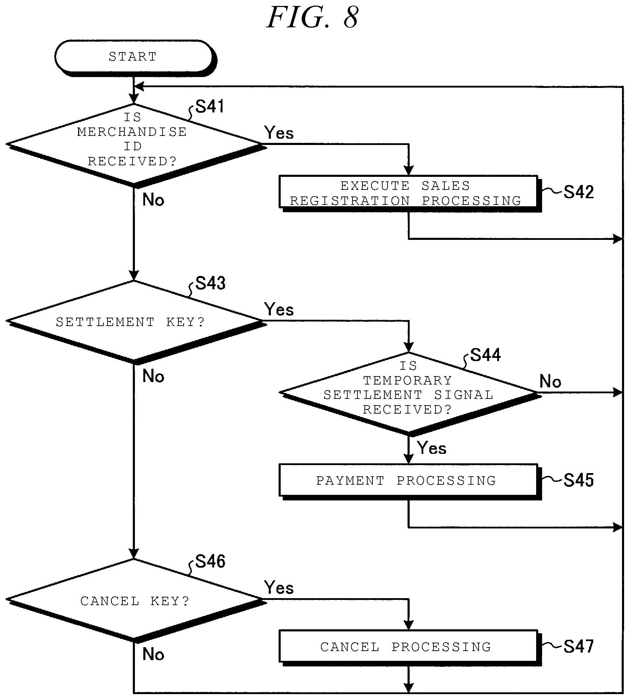

In Fig. 7, the operator display unit 22 displays a message 224. In S28, the control unit 100 displays a message, for example, "Please check whether or not a barcode is attached." When this message is displayed, the operator looks the merchandise which was image-captured immediately before, and checks whether or not the symbol is attached to the merchandise. In a case in which the operator determines that the symbol is attached, a cancel processing is executed on the merchandise. The cancel processing will be described in Fig. 8. After the cancel processing, the operator performs an image capturing operation again, with the symbol attached to the merchandise facing toward the reading window 24a. Thus, the image capturing unit 24 image-captures the symbol attached to the merchandise. The control unit 100 determines it as YES in S13, and then the control unit 100 performs processing of S 14 and S15. In addition, the operator does nothing if the symbol is determined as not being attached to the merchandise.

Returning to Fig. 6, after the processing of S28, in S27, in a case in which the category is determined as not being any one of G1, G2, and G3 (for example, a case in which it is determined that a specific category code is not stored in the category code column 1426) (No in S27), the control unit 100 (in particular, the first control unit 105) transmits the candidate merchandise ID to the POS terminal 30, and allows the POS terminal 30 to automatically execute the sales registration processing (S29). Then, the control unit 100 returns to S11. That is, with respect to the candidate merchandise, the message in S28 is displayed and the merchandise ID of the candidate merchandise is automatically transmitted to the POS terminal 30 in S29, and the POS terminal 30 automatically performs the sales registration processing. Accordingly, as a result, the sales registration processing can be promptly executed on the merchandise to which the symbol is not attached.

If image-capturing of all merchandise is finished, the operator operates the temporary settlement key 211. Thus, the merchandise reading apparatus 10 transmits a temporary settlement signal to the POS terminal 30 indicating that a temporary settlement is operated with respect to the transaction. The POS terminal 30 receiving the temporary settlement signal is capable of settlement processing.

Hereinafter, a control processing of the POS terminal 30 will be described. Fig. 8 is a flow chart showing an example sequence of operations of the control processing of the POS terminal 30. In Fig. 8, the control unit 300 determines whether or not the merchandise ID is received from the merchandise reading apparatus 10 (S41). If the merchandise ID is determined to be received (Yes of S41), the control unit 100 searches the merchandise master 342 based on the received merchandise ID, and acquires the merchandise information relating to the merchandise. Also, the control unit 300 executes a merchandise registration processing of the merchandise based on the acquired merchandise information (S42). That is, the POS terminal 30 automatically executes the sales registration processing based on the received merchandise ID. Also, the control unit 300 returns to S41.

In addition, if it is determined that the merchandise ID is not received (No of S41), the control unit 300 determines whether or not the settlement key 421 is operated (S43). If the settlement key 421 is determined as being operated (Yes of S43), the control unit 300 determines whether or not the temporary settlement signal is received from the merchandise reading apparatus 10 (S44). In a case in which the temporary settlement signal is determined to be received (Yes of S44), the control unit 300 executes the payment processing relating to the transaction based on the merchandise information stored in the merchandise information unit 331 (S45). Also, the control unit 300 returns to S41. In addition, if it is determined that the temporary settlement signal is not received (No of S44), the control unit 300 returns to S41.

In addition, in a case in which it is determined that the settlement key 421 is not operated (No of S43), the control unit 300 determined whether or not the cancel key 422 is operated (S46). If the cancel key 422 is determined as being operated (Yes of S46), the control unit 300 executes the cancel processing in which the merchandise information stored in the merchandise information unit 331, which was sales-registration processed immediately before, is deleted from the merchandise information unit 331 (S47). In this way, the control unit 300 cancels the sales registration processing of the merchandise which was sales-registration processed immediately before. Also, the control unit 300 returns to S41. Also, if it is determined that the cancel key 422 is not operated (No of S46), the control unit 300 returns to S41.

According to this configuration, when the merchandise reading apparatus 10 captures the image, if the candidate merchandise which has a likelihood that the symbol is attached is extracted, the control unit 100 allows the operator display unit 22 to display a message indicating that there is a likelihood that the symbol is attached to the merchandise. Therefore, the operator can check whether or not the symbol is attached to the merchandise.

In addition, the control unit 100 displays the message and transmits the merchandise ID specifying the candidate merchandise to the POS terminal 30, so that the sales registration processing is automatically performed. Therefore, the sales registration processing of the merchandise can be promptly executed in the POS terminal 30. The payment processing can be executed in a short time in the POS terminal 30.

In addition, when the operator determines that the merchandise for which the message displayed is a merchandise to which the symbol is attached, a cancel operation is performed in the POS terminal 30. In this way, the POS terminal 30 executes the cancel processing, and cancels the sales registration processing of the merchandise extracted by processing the generic object recognition.

### Modification Example

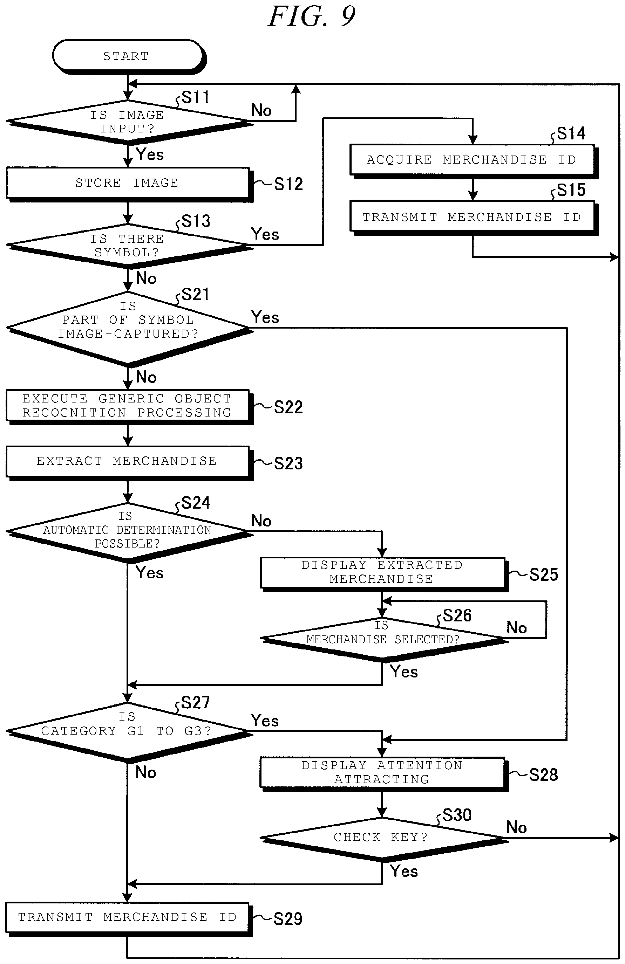

Hereinafter, a modification example of the embodiment will be described. Fig. 9 is a flow chart showing an example sequence of operations of a control processing of the merchandise reading apparatus 10 according to the modification example. Also, the flow chart of Fig. 9, certain operations have the same numeral as Fig. 6 and correspond to the same control processing as that of the embodiment described with respect Fig. 6, and description thereof will be omitted.

In the embodiment, if YES is determined in the processing of S27, the control unit 100 controls the operator display unit 22 to display a message for the operator, instructing the operator to check for the symbol (S28). After, the control unit 100 automatically executes a processing of S29. In the modification example, if YES is determined in the processing of S27, the control unit 100 controls the operator display unit 22 to display a message instructing the operator to check for the symbol (S28). In this processing of S28, the control unit 100 controls the operator display unit 22 to display a check key (not illustrated) operated by the operator, at the time of checking that the symbol is attached to the candidate merchandise. In a case in which the message is shown, the operator checks whether or not the symbol is attached to the image-captured merchandise. Also, the operator operates the check key for instructing that the sales registration processing is executed for the merchandise, in a case in which the symbol is not attached to the merchandise. The control unit 100 determined whether or not the check key is operated by the operator (S30). If the check key is determined to be operated (Yes of S30), the control unit 100 (in particular, the second control unit 106) executes subsequent processings after S29. In addition, if it is determined that the check key is not operated (for example, a key for checking that the symbol is not attached is operated) (No of S30), the control unit 100 returns to S11.

According to such a modification example, when the merchandise reading apparatus 10 captures an image, the apparatus controls the operator display unit 22 to display the message indicating that the symbol is attached to the merchandise with respect to the merchandise which has a likelihood that the symbol is attached. Therefore, the operator can check whether or not the symbol is attached to the merchandise.

In addition, if the merchandise is determined by the operator to not have the symbol attached, the merchandise ID is transmitted to the POS terminal 30. The POS terminal 30 executes the sales registration processing by the generic object recognition processing based on the received merchandise ID. Meanwhile, if the merchandise is determined by the operator to have the symbol attached thereto, the merchandise ID is not transmitted to the POS terminal 30. Therefore, in the POS terminal 30, the sales registration processing is not executed by the generic object recognition processing. Accordingly, with respect to the merchandise to which the symbol is attached, a cancel operation of the sales registration processing does not need to be executed by the operator in the POS terminal 30.

Also, in the modification example, the processing of S27, the processing of S28, and the processing of S30 may be executed after the processing of S24 and the processing of S26. However, the processing of S27 and the processing of S28 may be executed between the processing of S25 and the processing of S26. Accordingly, in a step in which one or a plurality of the candidate merchandise items are displayed in S25, the control unit 100 displays the message instructing the operator to check for the symbol. In this case, the control unit 100 (in particular, the determination unit 101) displays the message instructing the operator to check for the symbol, if it is determined that there is a likelihood that the symbol is attached to one or the plurality of the displayed candidate merchandise items. Therefore, the operator can check the symbol attached to the merchandise before selecting one of the candidate merchandises. Also, in this case, the processing of S30 is not necessary. In addition, in this case, if it is determined YES in S21, separate processings of S28 and S30 are executed.

Hitherto, while certain embodiments have been described, these embodiments have been presented by way of example only, and are not intended to limit the scope of the exemplary embodiment of the present disclosure. These embodiments described herein can be embodied in a variety of other forms, and various omissions, substitutions and changes in the form of the embodiments described herein may be made without departing from the framework of the exemplary embodiment of the present disclosure. These embodiments and modifications thereof are included in the scope and gist of the exemplary embodiment of the present disclosure and are included in a range same as the exemplary embodiment of the present disclosure disclosed in claims.

For example, in the embodiment, the merchandise reading apparatus 10 is described as an example of an check-out system, but it is not limited thereto, and the POS terminal 30 may be used as the check-out system.

In addition, in the embodiment, the operator display unit 22 displays the notification message instructing the operator to check for the symbol, but it is not limited thereto. For example, the message instructing the operator to check for the symbol may be provided by voice generated from the voice outputting unit 26 or light emitted from a light emitting unit which is not shown.

In addition, in the embodiment, both the merchandise reading apparatus 10 and the POS terminal 30 are provided with the merchandise master data table, but only the POS terminal 30 may be provided with the merchandise master data table.

In addition, in the embodiment, the operator display unit 22 is described as a notification unit, but it is not limited thereto. For example, the operator display unit 43 may be used as the notification unit. In addition, the voice outputting unit 26 may be used as the notification unit. In this case, the voice outputting unit 26 notifies the likelihood that the symbol is attached as voice.

In addition, in the embodiment, the generic object recognition processing and a calculation processing of the degree of similarity are executed by the merchandise reading apparatus 10, but a part of all of these processing may be executed by the POS terminal 30.

In addition, in the embodiment, in the check-out system 1 which is configured with the POS terminal 30 and the merchandise reading apparatus 10, the merchandise reading apparatus 10 is described as the check-out system, but is not limited thereto. For example, a single apparatus having the functions of the POS terminal 30 and the merchandise reading apparatus 10 may be used as the check-out system. As one apparatus having the functions of the POS terminal 30 and the merchandise reading apparatus 10, for example, a self check out apparatus which is provided and used at a store such as a supermarket (hereinafter, simply refer to as a self-service POS) is exemplified.

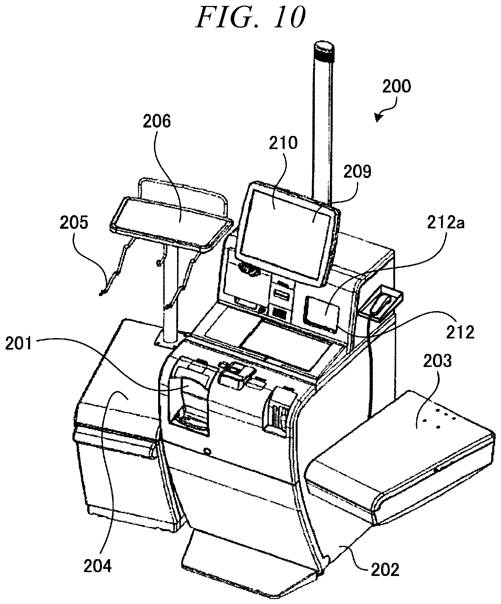

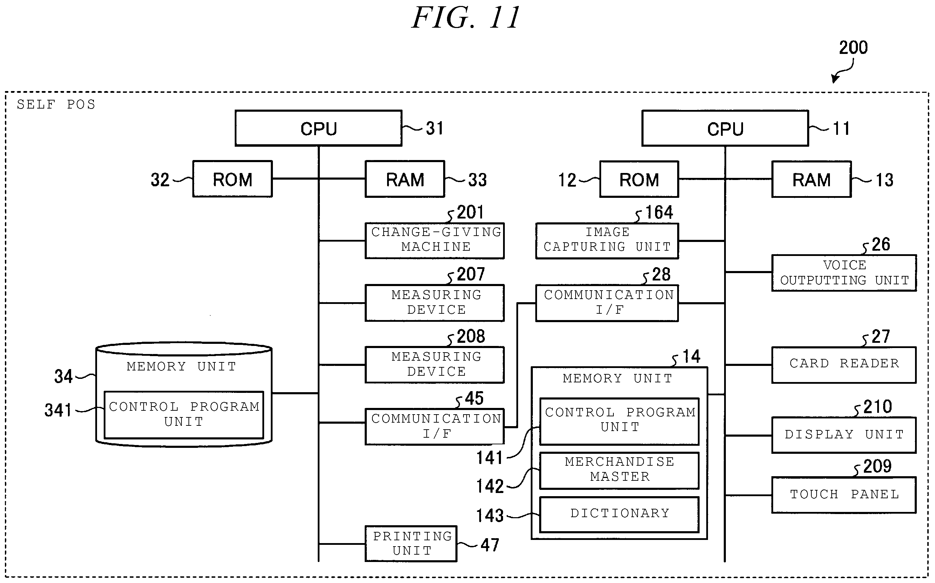

Here, Fig. 10 is a perspective view showing an exterior configuration of a self-service POS 200, and Fig. 11 is a block diagram showing a hardware configuration of the self-service POS 200. Also, hereinafter, the same reference numeral is given to the components having the same function as that of the embodiment shown in Fig. 2 to Fig. 9, and repeated description thereof will be omitted.

As shown in Fig. 10 and Fig. 11, a main body 202 of the self-service POS 200 is provided with a display unit 210 disposed on a surface of the touch panel 209 or a merchandise reading unit 212 which reads a merchandise image in order to recognize the merchandise.

As the display unit 210, for example, a liquid crystal displayer is used. The display unit 210 displays a guide screen for informing a customer of an operation method of the self POS 200, various inputting screens, a registration screen displaying the read merchandise information by the merchandise reading unit 212, a check-out screen selecting a payment method, which displays total amounts of money, deposit amounts, change amount, and the like.

The merchandise reading unit 212 read the merchandise image using the image capturing unit 164 when the customer holds a code symbol attached to the merchandise to the reading window 212a of the merchandise reading unit 212.

In addition, a merchandise placing table 203 for placing merchandise which is not settled yet, is installed on the right side of the main body 202, and a merchandise placing table 204 for placing merchandise which is settled is installed on the left side of the main body 202. In addition, a bag hook 205 for hooking a bag in order to input the merchandise, which is not settled yet, or a temporary table 206 for temporally placing the bag before the merchandise, which is not settled yet, is put therein. The merchandise placing tables 203 and 204 are respectively provided with measuring devices 207 and 208, and have a function of confirming that a weight of the merchandise is the same as before and after payment.

In addition, a change-giving machine 201 for performing depositing bills for settlement or receiving change is installed on the main body 202 of the self POS 200.

In a case in which the embodiment of the exemplary embodiment is applied to the self-service POS 200 including such a configuration, the self POS 200 functions as the check-out system. Moreover, one apparatus having the functions of the POS terminal 30 and the merchandise reading apparatus 10 is not limited to the self-service POS 200 of the configuration described above, and may be an apparatus which is configured without having the measuring devices 207 and 208.

Also, a program for executing the merchandise reading apparatus 10 of the embodiment is provided by being recorded in a recording medium, which can be read by a computer, such as a CD-ROM (DVD), a flexible device (FD), a CD-R, and a digital versatile disk, in an installable type file or an executable format.

In addition, the program being executed by the merchandise reading apparatus 10 of the embodiment may be stored in a computer connected to a network such as Internet, and may be provided by being downloaded through a network. In addition, the programs being executed by the merchandise reading apparatus 10 of the embodiment may be provided and distributed through a network such as Internet.

In addition, a program being executed by the merchandise reading apparatus 10 of the embodiment may be configured so as to provide in a ROM, or the like in advance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A check-out system comprising:
an image capturing device that captures an image of a merchandise item;
a display; and
a processor configured to:
receive the captured image of the merchandise item,
determine whether the captured image includes a symbol on the merchandise item corresponding to a merchandise ID,
if the captured image includes the symbol, retrieve the merchandise ID corresponding to the symbol,
if the captured image does not include the symbol:
identify the merchandise item in the captured image based on object recognition processing,
based on the identification of the merchandise item, retrieve a corresponding merchandise ID and a merchandise category,
determine whether the merchandise item is likely to include the symbol based on the merchandise category, and
if the merchandise item is determined to likely include the symbol, control the display to display a message instructing an operator to check for the symbol, and perform settlement processing with respect to the merchandise items corresponding to one or more of the retrieved merchandise IDs.

2. The apparatus according to claim 1, wherein the processor is further configured to:
identify a plurality of candidate merchandise items using the object recognition processing, and
control the display to display the plurality of candidate merchandise items, wherein the merchandise item in the captured image is identified further based on a selection of one candidate merchandise item from among the plurality of displayed candidate merchandise items.

3. The apparatus according to claim 1 or 2, wherein the processor is further configured to:
determine whether the captured image includes only a portion of the symbol on the merchandise item, and
if the captured image is determined to include only the portion of the symbol on the merchandise item, control the display to display the message instructing an operator to check for the symbol.

4. The apparatus according to any one of claims 1 to 3, further comprising:
a storage device that stores a data table including merchandise IDs each corresponding to a different merchandise item, wherein the processor retrieves the merchandise ID from the data table stored in the storage device.

5. The apparatus according to claim 4, wherein:
the data table includes feature values corresponding to each different merchandise item, and
the processor performs the object recognition processing by extracting feature values from the captured image and comparing the extracted feature values to the feature values included in the data table.

6. The apparatus according to any one of claims 1 to 5, further comprising:
a communication interface, wherein the processor retrieves, via the communication interface, the merchandise ID from a data table stored in a remote storage device.

7. The apparatus according to any one of claims 1 to 6, further comprising:
a communication interface, wherein the settlement processing includes transmitting, via the communication interface, the retrieved merchandise ID to a settlement device configured to perform payment processing.

8. The apparatus according to any one of claims 1 to 7, wherein:
if the captured image does not include the symbol and if the merchandise item is determined to likely include the symbol, before performing the settlement processing, the processor waits for the image capturing device to capture a new image of the merchandise item and retrieves a merchandise ID corresponding to the symbol included in the new image.

9. A method of registering merchandise in a check-out system, the method comprising:
capturing an image of an merchandise item with an image capturing device;
determining whether the captured image includes a symbol corresponding to a merchandise ID;
if the captured image includes the symbol, retrieve the merchandise ID corresponding to the symbol;
if the captured image does not include the symbol:
identifying the merchandise item in the captured image based on object recognition processing,
based on the identification of the merchandise item, retrieving a corresponding merchandise ID and a merchandise category,
determining whether the merchandise item is likely to include the symbol based on the merchandise category, and
if the merchandise item is determined to likely include the symbol, displaying a message instructing an operator to check for the symbol; and
performing settlement processing with respect to the merchandise items corresponding to one or more of the retrieved merchandise IDs.

10. The method according to claim 9, further comprising the steps of:
identifying a plurality of candidate merchandise items using the object recognition processing; and
displaying the plurality of candidate merchandise items,
wherein the merchandise item in the captured image is identified further based on a selection of one candidate merchandise item from among the plurality of displayed candidate merchandise items.

11. The method according to claim 9 or 10, further comprising the steps of:
determining whether the captured image includes only a portion of the symbol on the merchandise item; and
if the captured image is determined to include only the portion of the symbol on the merchandise item, displaying the message instructing an operator to check for the symbol

12. The method according to any one of claims 9 to 11, further comprising:
storing a data table including merchandise IDs each corresponding to a different merchandise item, wherein the merchandise ID are retrieved from the data table stored in the storage device.

13. The method according to claim 12, wherein:
the data table includes feature values corresponding to each different merchandise item, and
the object recognition processing is performed by extracting feature values from the captured image and comparing the extracted feature values to the feature values included in the data table.

14. The method according to any one of claims 9 to 13, wherein the merchandise ID is retrieved from a data table stored in a remote storage device.

15. The method according to any one of claims 9 to 14, wherein the settlement processing includes transmitting, via a communication interface, the retrieved merchandise ID to a settlement device configured to perform payment processing.
